Europäisches Patentamt

European Patent Office

Office européen des brevets

(11) Numéro de publication : **0 522 949 A1**

# (12) DEMANDE DE BREVET EUROPEEN

(21) Numéro de dépôt : **92401936.7**

(22) Date de dépôt : **06.07.92**

(51) Int. Cl.⁵ : **G01V 3/08**

(30) Priorité : **08.07.91 FR 9108547**

(43) Date de publication de la demande :
**13.01.93 Bulletin 93/02**

(84) Etats contractants désignés :
**BE CH DE ES FR GB IT LI LU NL**

(71) Demandeur : **BERTIN & CIE**
**59, Rue Pierre Curie Z.I. des Gâtines**
**F-78373 Plaisir Cedex (FR)**

(72) Inventeur : **Facon, Pierre**
**16 avenue du Maréchal D. Haig**
**F-78000 Versailles (FR)**
Inventeur : **Sajot, Pierre**
**29, Résidence du Parc**
**F-78650 Beynes (FR)**

(74) Mandataire : **Colas, Jean-Pierre et al**
**Cabinet de Boisse 37, avenue Franklin D. Roosevelt**
**F-75008 Paris (FR)**

(54) **Détecteur de proximité.**

(57) Ce détecteur comprend un oscillateur à fréquence variable (1) produisant un premier signal électrique, un circuit d'émission (3) à antenne capacitive auquel est appliqué ledit premier signal, un circuit de réception (6) formant avec le circuit d'émission (3) un coupleur sélectif pour recueillir un second signal électrique à la fréquence de l'oscillateur, et un circuit (9) pour comparer les phases des premier et second signaux électriques et produire un signal de sortie en réponse à une variation du déphasage entre lesdits signaux due à la présence dans l'environnement de l'antenne d'un corps étranger à détecter.

Le détecteur comprend en outre un circuit de réaction (13) piloté par le signal de sortie du circuit de comparaison (9) et commandant l'oscillateur (1) pour faire varier la fréquence du premier signal dans le sens qui tend à annuler ladite variation du déphasage.

FIG.:1

La présente invention concerne un détecteur de proximité, destiné notamment à la détection d'obstacles à proximité d'un mobile tel que chariot filoguidé, robot, élément de machine, ou à la détection d'intrusion dans un local.

La demande de brevet français FR-A-2 606 162 décrit un tel détecteur dans lequel un circuit d'émission accordé à antenne capacitive est excité par un oscillateur radiofréquence produisant un signal d'excitation de haute fréquence. Des moyens de réception comprenant une bobine, formant avec une bobine du circuit d'émission un coupleur sélectif, recueillent un signal électrique à la fréquence de l'oscillateur et dont l'amplitude est fonction de l'accord du circuit d'émission. Quand un corps suffisamment conducteur est placé à une distance de l'antenne suffisante pour modifier la capacité de celle-ci, un démodulateur connecté aux moyens de réception détecte la variation de la tension crête à crête du signal délivré par les moyens de réception et produit un signal de sortie fonction de la distance de l'antenne au corps étranger.

Un tel détecteur a l'avantage de faire appel à des techniques très simples et d'être par conséquent peu onéreux. Toutefois, il nécessite lors de sa mise en service un réglage de zéro précis, c'est-à-dire que le circuit d'émission doit être parfaitement accordé sur la fréquence de l'oscillateur, faute de quoi la mesure de distance fournie par le signal de sortie se trouve entachée d'erreur. En outre, cette mesure se trouve également affectée pendant la durée de vie du détecteur par les dérives de toutes natures (thermique, de tension, variation de capacité de l'antenne, etc...) auxquelles sont inévitablement soumis les différents composants du détecteur. En pratique, il s'avère délicat de compenser ces différentes dérives, sauf à recourir à des solutions techniques relativement complexes qui grèvent de manière excessive le coût du détecteur.

On connaît également par le document FR-A-2.461.990 un détecteur de proximité du type comprenant un oscillateur radiofréquence produisant un premier signal électrique, des moyens d'émission-réception produisant un second signal électrique en réponse à l'application dudit premier signal électrique, un circuit pour comparer les phases desdits premier et second signaux électriques et produire un signal de sortie en réponse à une variation de leur déphasage, et un circuit de réaction piloté par ledit signal de sortie pour tendre à annuler ladite variation du déphasage. Le circuit de réaction comprend un circuit intégrateur à constante de temps élevée devant la gamme de vitesses relatives de déplacement dudit corps étranger par rapport auxdits moyens d'émission-réception et un déphaseur variable connecté entre l'oscillateur et le circuit d'émission et piloté par le circuit intégrateur.

Un tel détecteur permet de compenser automatiquement les dérives lentes lorsque les paramètres atmosphériques de l'environnement varient et, dans certaines limites, d'assurer un réglage de zéro.

Toutefois, ce détecteur nécessite un circuit accordé de manière relativement précise sur la fréquence de fonctionnement, ce qui requiert à la mise en service des opérations de tarage relativement coûteuses en main-d'oeuvre. De plus, il utilise un circuit d'émission comprenant une ligne bifilaire ne permettant une détection qu'à très faible distance.

L'invention vise à fournir un détecteur de proximité du type précité qui, tout en permettant de s'affranchir de tout problème de réglage de zéro, tant à la mise en service grâce à une auto-adaptation dans une très large gamme de caractéristiques du circuit d'émission qu'en cours de fonctionnement à raison des dérives des différents composants, soit peu coûteux à réaliser et de conception simple, présente une bonne immunité aux bruits et offre des facilités de détection d'anomalies de fonctionnement.

A cet effet, l'invention a pour objet un détecteur de proximité pour détecter la présence d'un corps étranger susceptible de se déplacer dans un environnement, comprenant un oscillateur radiofréquence produisant un premier signal électrique, des moyens d'émission-réception produisant un second signal électrique en réponse à l'application dudit premier signal électrique, un circuit pour comparer les phases desdits premier et second signaux électriques et produire un signal de sortie en réponse à une variation de leur déphasage, et un circuit de réaction piloté par ledit signal de sortie pour tendre à annuler ladite variation du déphasage, ledit circuit de réaction comprenant un circuit intégrateur à constante de temps élevée devant la gamme de vitesses relatives de déplacement dudit corps étranger par rapport auxdits moyens d'émission-réception, caractérisé en ce que les moyens d'émission-réception comprennent un circuit d'émission à antenne capacitive rayonnante et un circuit de réception formant avec ledit circuit d'émission un coupleur sélectif et en ce que ledit oscillateur est un oscillateur à fréquence ajustable piloté par ledit circuit intégrateur pour faire varier la fréquence dudit premier signal dans le sens qui tend à assurer l'accord dudit circuit d'émission par annulation de ladite variation du déphasage.

L'oscillateur est asservi de manière à rattraper automatiquement la fréquence d'accord et, à la différence des détecteurs à déphaseur ajustable de la technique antérieure, le détecteur selon l'invention permet donc de comparer des signaux qui ont une amplitude voisine de leur amplitude maximale. Il offre ainsi une bonne immunité aux bruits et la possibilité de détecter une anomalie de fonctionnement par mesure de cette amplitude. Le rattrapage automatique de l'accord a également pour avantage important d'offrir une sensibilité élevée, car les déphasages entre circuits d'émission et de réception ne sont significatifs qu'autour de l'accord. C'est la raison pour laquelle le circuit de réaction du document FR-A-2.461.990 n'est pas applicable au détecteur du document FR-A-2.606.162.

D'autres caractéristiques et avantages de l'invention ressortiront de la description qui va suivre, donnée uniquement à titre d'exemple et illustrée par les dessins annexés sur lesquels :

la figure 1 est un schéma-bloc du détecteur suivant l'invention ;

la figure 2 est un schéma électrique d'une forme particulière de réalisation du détecteur de proximité suivant l'invention ;

la figure 3 est un schéma électrique d'un détecteur selon la figure 2 plus particulièrement adapté à un mobile tel qu'un chariot filoguidé, et

la figure 4 est un schéma électrique du circuit d'émission du détecteur de proximité de la figure 1 plus particulièrement adapté à un dispositif comportant deux parties mobiles métalliques conjuguées susceptibles de mouvements relatifs l'une par rapport à l'autre.

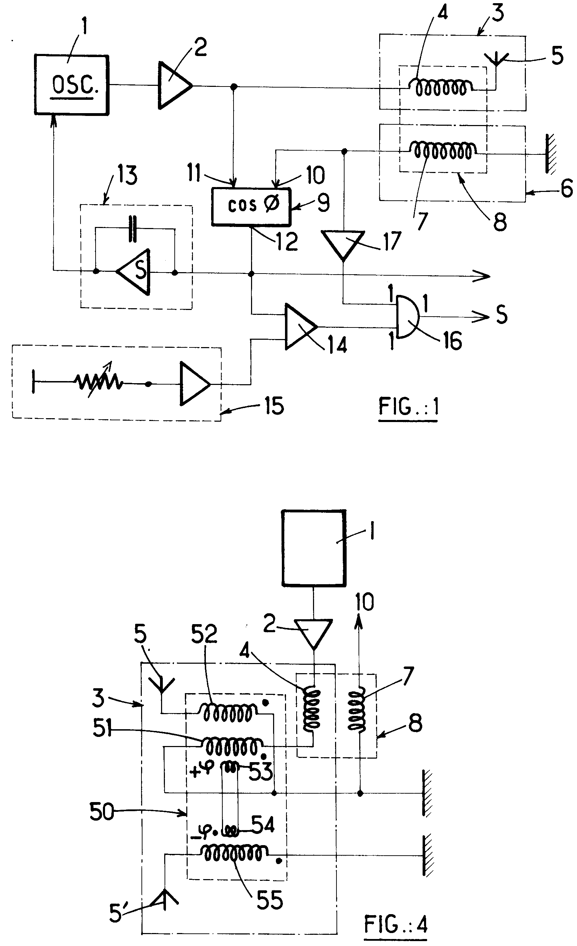

En se référant à la figure 1, le détecteur de proximité comprend un oscillateur radiofréquence 1 produisant un signal électrique dont la fréquence est ajustable entre, par exemple, 150 et 400 KHz. Ce signal, après amplification par un amplificateur radiofréquence 2, est appliqué à un circuit d'émission 3 comprenant une première bobine 4 et une antenne capacitive 5 constituée, de préférence, par un fil ou lame conductrice de l'électricité. Par construction, le circuit d'émission 3 ne nécessite pas d'accord préalable dans une très large gamme de valeurs de la capacité de l'antenne 5 et ne requiert aucun tarage lors de l'installation sur site. Un circuit de réception 6, comprenant une seconde bobine 7 constituant avec la première bobine 4 un coupleur sélectif 8, recueille un signal électrique à la fréquence de l'oscillateur 1. A l'accord du circuit d'émission 3 le signal recueilli sur la bobine 7 est déphasé de $\pi/2$ par rapport au signal fourni à la bobine 4.

La bobine 7 est connectée, d'une part à la masse, d'autre part à une entrée 10 d'un circuit comparateur de phases 9 qui reçoit sur une autre entrée 11 le signal de sortie de l'amplificateur 2, c'est-à-dire le signal appliqué au circuit d'émission 3. Le circuit 9 comparateur de phases produit à sa sortie 12 une tension continue qui est proportionnelle au cosinus du déphasage entre les signaux appliqués à ses entrées 10 et 11.

Le signal de sortie du comparateur 9 est appliqué à l'entrée d'un circuit intégrateur 13 à constante de temps élevée dont la sortie pilote l'oscillateur 1 pour faire varier sa fréquence dans le sens qui tend à annuler le cosinus du déphasage entre les signaux appliqués aux entrées 11 et 10. Le signal à la sortie 12 du comparateur de phases 9 est également comparé dans un comparateur 14 à une tension de seuil fixée par un circuit 15 générateur de tension de seuil. La sortie du comparateur 14 est connectée à l'une des entrées d'une porte ET 16 dont l'autre entrée est connectée à l'entrée 10 du comparateur 9 par un circuit détecteur d'état 17 qui compare l'amplitude crête à crête du signal produit par le circuit de réception 6 à une valeur de seuil et dont la sortie change d'état logique si cette valeur crête à crête est inférieure à la valeur de seuil, indiquant ainsi une anomalie de fonctionnement.

En l'absence dans l'environnement de l'antenne 5 d'un obstacle ou corps étranger en mouvement susceptible de faire varier le champ électrique qu'elle émet, l'accord du circuit 3 est assuré grâce à la boucle de réaction 13 entre le comparateur 12 et l'oscillateur 1 et les signaux issus de l'amplificateur 2 et du circuit de réception 6 sont en quadrature. Le signal à la sortie 12 du comparateur de phases 9 est nul ou à peu près nul, et par conséquent le circuit intégrateur 13 n'applique aucune correction à l'oscillateur 1. D'autre part, le signal à la sortie 12 est inférieur au seuil fixé par le générateur 15 et le comparateur 14 présente à sa sortie un état haut correspondant à un état logique "1". L'autre entrée de la porte ET 16 reçoit également du circuit détecteur 17 un état logique "1" car, en l'absence d'anomalie de fonctionnement, le circuit d'émission 3 étant alors sensiblement à l'accord, l'amplitude crête à crête du signal induit dans la bobine 7 est supérieure au seuil fixé dans le circuit 17. La porte ET 16 présente donc en sortie un état logique "1".

Lorsqu'un corps étranger se déplaçant dans l'environnement de l'antenne 5 provoque une variation du champ électrique qu'elle émet, ce qui est équivalent à une variation de sa capacité apparente, il se produit un déplacement de la fréquence d'accord du circuit d'émission 3. Le déphasage entre la tension engendrée aux bornes de la bobine 7 et celle d'excitation du circuit d'émission 3 est modifié et le cosinus du déphasage n'est plus nul. Cette variation de phase est convertie par le comparateur 9 en une tension continue dont la valeur varie avec la vitesse de déplacement relatif de l'antenne 5 par rapport au corps étranger. Si cette vitesse relative est suffisante, la tension à la sortie 12 du comparateur 9 dépasse la tension de seuil appliquée à l'autre entrée du comparateur 14, la sortie de celui-ci passe de l'état "1" à l'état "0", et il en va de même de la sortie de la porte ET 16. Ce changement d'état logique de la sortie de la porte ET 16 est donc représentatif de la présence d'un corps étranger en mouvement dans l'environnement de l'antenne 5.

La portée du détecteur est variable en fonction de la géométrie de l'antenne et de la nature du corps étranger. Elle est généralement inférieure à 1 mètre, ce qui destine le détecteur à la détection d'obstacles ou corps étrangers rapprochés.

La constante de temps du circuit intégrateur 13 est choisie suffisamment élevée pour que la correction de fréquence effectuée par l'oscillateur 1 soit, dans les conditions normales d'utilisation, insuffisante pour rattraper le désaccord du circuit d'émission 3 pendant le mouvement relatif de l'antenne 5 et d'un corps étranger.

Si un corps étranger est détecté et si son mouvement relatif par rapport à l'antenne 5 est arrêté alors que ce corps étranger se trouve encore dans l'environnement de l'antenne, la correction appliquée par le circuit de réaction 13 tend à ramener progressivement la fréquence du signal émis par l'oscillateur 1 à la valeur correspondant à l'accord du circuit d'émission 3 (dont la capacité apparente est modifiée par la présence immobile du corps étranger). Par conséquent, au bout d'un certain temps le cosinus du déphasage revient à une valeur inférieure au seuil appliqué au comparateur 14. La sortie de celui-ci, ainsi que celle de la porte ET 16, revient donc à l'état logique "1". Pour inhiber ce retour à l'état initial alors qu'un corps étranger se trouve encore à proximité de l'antenne 5, un circuit logique de mémorisation du basculement de la sortie de la porte ET 16 peut être prévu derrière celle-ci comme cela sera expliqué plus en détail dans la suite.

Enfin, en cas d'anomalie du fonctionnement du circuit d'émission 3, du circuit de réception 6, ou des circuits électriques associés, l'amplitude crête à crête du signal aux bornes de la bobine 7 passe en-dessous de la valeur du seuil fixé dans le circuit détecteur d'état 17 et la sortie de celui-ci, ainsi que celle de la porte ET 16, passent à l'état logique "0".

Le détecteur de la figure 1 permet tout à la fois de détecter de façon dynamique la proximité d'un corps étranger et les anomalies de fonctionnement du détecteur lui-même. Il assure en outre un réglage automatique de zéro à la mise en service et pendant le fonctionnement.

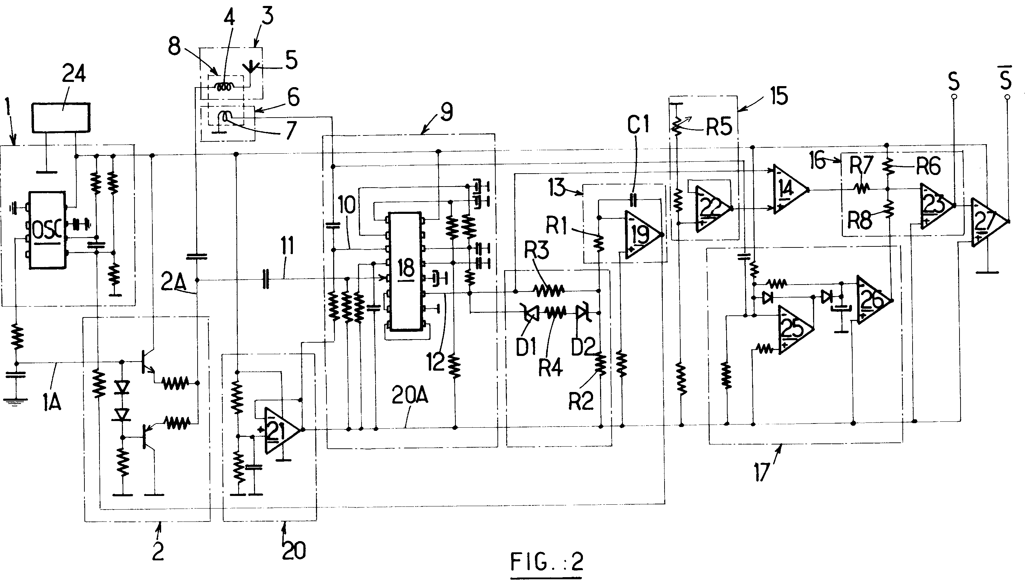

Le schéma électrique de la figure 2 montre une forme particulière de réalisation du détecteur de proximité de la figure 1. Suivant ce schéma, l'oscillateur 1 est réalisé à partir d'un circuit intégré NE 566 qui, par la ligne 1A, attaque l'amplificateur 2. L'amplificateur 2 est d'un type conventionnel à transistors et sa sortie 2A attaque le circuit d'émission 3 décrit précédemment et l'entrée 11 du comparateur de phases 9 réalisé à partir d'un multiplicateur quatre cadrans 18 qui peut être constitué d'un circuit intégré de type XR 2208. Le circuit 18 reçoit sur son entrée 10 le signal produit par la bobine 7 du circuit de réception 6.

La sortie 12 du circuit 18 attaque l'entrée de l'intégrateur 13 constituée de manière classique par un amplificateur opérationnel 19 dont l'entrée inverseuse est connectée à sa sortie par l'intermédiaire d'un condensateur C1. L'entrée inverseuse du circuit 19 est connectée par l'intermédiaire de résistances en série R1 et R2 à la sortie d'un générateur 20 qui produit sur sa sortie 20A une tension de référence interne commune pour les différents circuits du détecteur. Le générateur 20 de tension de référence interne est constitué à partir d'un amplificateur opérationnel 21.

La sortie 12 du circuit 18 est connectée au point de jonction entre les résistances R1 et R2 par le montage en parallèle d'un premier circuit comprenant une résistance R3 et d'un deuxième circuit comprenant deux diodes Zener D1 et D2 montées tête-bêche de part et d'autre d'une résistance R4. Les circuits en parallèle comprenant les résistances R3 et R4 forment avec la résistance R2 un diviseur de tension variable avec la tension produite à la sortie 12 du circuit 18. A titre d'exemple, les résistances R3 et R4 peuvent avoir respectivement des valeurs de 150 KΩ et 4,7 KΩ, la résistance R3 étant en service tant que la tension présente à la sortie 12 reste inférieure à environ 3 Volts, la résistance R4 se trouvant mise en service au-delà de cette valeur. Ce diviseur de tension variable permet d'accélérer le réglage de l'accord à la mise sous tension, puis de réaliser le rattrapage lent des dérives dans la plage normale de travail du circuit.

La sortie 12 du circuit 18 attaque également l'entrée inverseuse d'un amplificateur opérationnel constituant le circuit de comparaison 14. Le circuit 15 de fixation du seuil de comparaison est constitué à partir d'un amplificateur opérationnel 22 dont la sortie est connectée à l'entrée non inverseuse du circuit de comparaison 14. Une résistance réglable R5 connectée dans le circuit de polarisation de l'entrée non inverseuse du circuit 22 permet de régler la valeur du seuil de comparaison appliqué à l'entrée non inverseuse du circuit 14.

La porte logique à fonction ET 16 est constituée à partir d'un amplificateur opérationnel 23 dont l'entrée non inverseuse est connectée à la sortie 20A de tension de référence interne du circuit 20 et dont l'entrée inverseuse est connectée par l'intermédiaire de résistances R6, R7 et R8 respectivement à l'une des bornes de la source d'alimentation 24 du détecteur, à la sortie du circuit comparateur 14 et à la sortie du circuit détecteur d'état 17.

Le circuit détecteur d'état 17 comprend un amplificateur opérationnel 25 monté en voltmètre de crête dont la sortie attaque l'entrée inverseuse d'un amplificateur 26 monté en comparateur. L'entrée non inverseuse de l'amplificateur 26 est connectée à la sortie 20A du générateur 20 de tension de référence interne. Le signal S présent à la sortie de l'amplificateur opérationnel 23 représente l'état logique de sortie de la porte ET 16 et un amplificateur opérationnel 27 monté en inverseur à la sortie de l'amplificateur 23 permet de produire une sortie complémentaire $\overline{S}$.

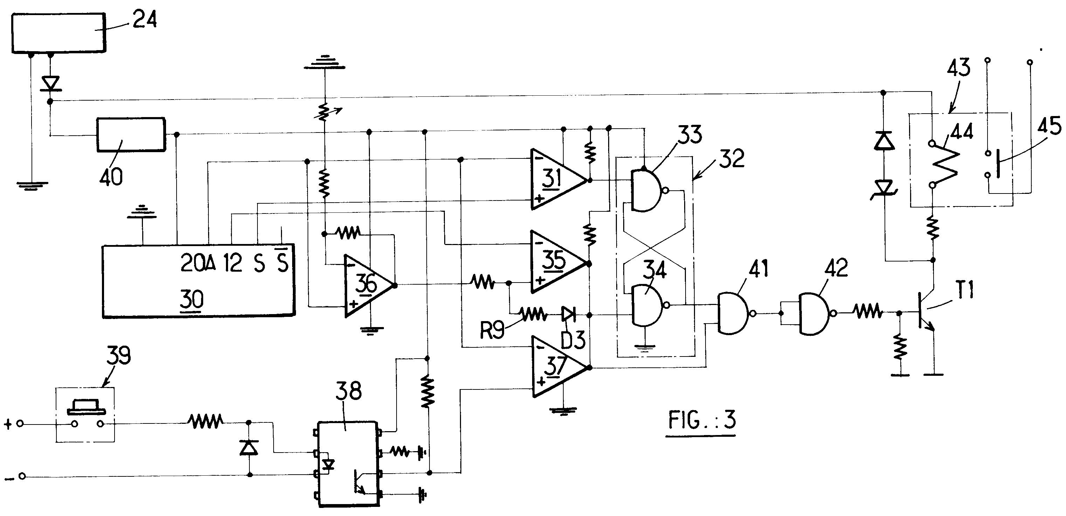

En se reportant maintenant à la figure 3, l'ensemble des circuits de la figure 2 est représenté par le bloc 30.

La sortie S du circuit 30 attaque l'entrée non inverseuse d'un amplificateur opérationnel 31 dont l'entrée inverseuse est connectée à la sortie 20A de tension de référence interne. La sortie de l'amplificateur opérationnel 31 est connectée à l'entrée "SET" d'une mémoire 32 de l'état de basculement constituée d'une bascule RS formée de manière conventionnelle de deux portes "NAND" 33 et 34.

Un autre amplificateur opérationnel 35 est connecté par son entrée inverseuse à la sortie 12 du circuit 18 de la figure 2 et par son entrée non inverseuse à un amplificateur opérationnel 36 générant une tension de référence. Un circuit série constitué d'une résistance R9 et d'une diode D3 est monté en parallèle entre l'entrée non inverseuse et la sortie de l'amplificateur opérationnel 35.

Un autre amplificateur opérationnel 37 est connecté par son entrée inverseuse à la sortie 20A de tension de référence interne et par son entrée non inverseuse à un circuit 38 de commande de réarmement manuel constitué, par exemple, par un circuit intégré 6N 139. Une tension de commande peut être appliquée sélectivement par un moyen approprié tel qu'un bouton-poussoir 39 entre deux entrées du circuit 38. L'application de cette tension à l'entrée du circuit 38 provoque la mise à la masse de l'entrée non inverseuse du circuit 37 tandis que, lorsque le bouton-poussoir 39 n'est pas actionné, l'entrée non inverseuse du circuit 37 se trouve à la tension d'alimentation délivrée par un régulateur de tension 40 connecté entre la source d'alimentation 24 et les bornes de polarisation du circuit 30 et des autres circuits de la figure 3.

Les sorties des circuits 35 et 37 sont connectées à l'entrée "RESET" de la bascule RS 32 et, en outre, la sortie du circuit 37 est connectée à l'une des entrées d'une porte "NAND" 41 dont l'autre entrée est connectée à la sortie de la bascule RS 32. La sortie de la porte "NAND" 41 est connectée aux deux entrées d'une autre porte "NAND" 42 montée en inverseur et dont la sortie attaque la base d'un transistor T1 dont la jonction émetteur-collecteur est connectée en série, entre la source d'alimentation 24 et la masse, avec l'enroulement 44 d'un relais 43 dont le contact mobile 45 commande des moyens de motorisation (non représentés), tels qu'un moteur électrique, du dispositif sur lequel se trouve monté le détecteur de proximité décrit ci-dessus en regard de la figure 3. Le circuit qui vient d'être décrit convient particulièrement à la commande d'un dispositif motorisé tel qu'un chariot filoguidé.

En l'absence d'obstacle dans l'environnement de l'antenne 5, la sortie du circuit 31 se trouve à une tension correspondant à un état logique "1" et il en va de même de la sortie de la bascule RS 32. La sortie du circuit 37 est également à l'état "1" de sorte que la sortie de la porte "NAND" 41 est à l'état "0", celle de la porte "NAND" 42 à l'état "1". Le transistor T1 est alors conducteur, l'enroulement 44 est alimenté et le contact mobile 45 est fermé de sorte que les moyens de motorisation peuvent être alimentés normalement.

En cas de détection d'un obstacle, la sortie S du bloc 30 passe de 1 à 0 et la sortie du circuit 31 bascule également de 1 à 0. La sortie de la bascule 32 change d'état, de même que les sorties des portes "NAND" 41 et 42, et le transistor T1 est bloqué. L'enroulement 44 n'est plus alimenté et le contact mobile 45 s'ouvre, interrompant ainsi l'alimentation des moyens de motorisation. Cependant, du fait qu'il n'y a plus de mouvement relatif entre l'obstacle détecté et l'antenne 5, le circuit d'émission revient progressivement à l'accord en raison de la présence du circuit de réaction 13 et le signal S revient à l'état "1". La sortie du circuit 31 repasse à l'état "1", mais la bascule RS 32 ne change pas d'état et conserve la mémoire du basculement initial. Le transistor T1 reste donc bloqué.

Pour faire revenir la sortie de la bascule 32 à l'état "1", il convient d'appliquer un état "0" à l'entrée de la porte "NAND" 34 qui se trouve connectée aux sorties des circuits 35 et 37. Si l'on retire l'obstacle qui se trouve dans l'environnement de l'antenne 5, la sortie du circuit 35 passe de l'état "1" à l'état "0" en raison de la variation induite sur le signal à la sortie 12 (changement de signe). La sortie de la bascule 32 peut alors repasser à l'état "1" et par conséquent le transistor T1 se trouve rendu conducteur, le relais 45 se ferme et les moyens de motorisation peuvent être normalement alimentés.

Cependant, même si l'obstacle n'est pas enlevé de l'environnement de l'antenne, il est possible de procéder à un réarmement manuel en appuyant sur le bouton-poussoir 39. Ceci a pour effet de mettre l'entrée non inverseuse du circuit 37 à la masse et sa sortie passe donc à 0. La sortie de la bascule 32 passe donc à l'état "1" mais le transistor T1 reste bloqué car la sortie du circuit 37 est alors à l'état "0". Ce n'est que lorsque le bouton-poussoir 39 est relâché que la sortie du circuit 37 revient à l'état "1" et que le transistor T1 est à nouveau alimenté. Cette disposition permet d'assurer une excellente sécurité de fonctionnement du détecteur de proximité dans l'application considérée.

La figure 4 illustre une variante de réalisation du circuit d'émission 3. Si l'antenne 5 est montée dans une partie métallique mobile par rapport à une autre partie métallique qui ne constitue pas un obstacle à détecter, leur rapprochement relatif ne pourra pas dépasser un certain seuil car, en l'absence de disposition appropriée, le détecteur percevra l'autre partie métallique comme un obstacle : tel est le cas notamment si le détecteur est appliqué à l'ouverture et la fermeture automatique de portes dont le battant et le dormant sont métalliques.

Le circuit d'émission de la figure 4 permet de pallier cet inconvénient grâce au fait qu'il comporte une deuxième antenne 5′ couplée en opposition de phases à l'antenne 5 par l'intermédiaire d'un transformateur d'impédance 50.

La bobine 4 est couplée à l'antenne 5 par l'intermédiaire du primaire 51 du transformateur et d'un bobinage 52 connecté entre l'antenne 5 et la masse. Le primaire 51 est également couplé à un bobinage 53 connecté en série avec un bobinage 54. Le bobinage 54 est couplé à l'antenne 5' par l'intermédiaire d'un bobinage 55 connecté entre l'antenne 5' et la masse. Les bobinages 53 et 54 sont couplés en opposition de phase avec les bobinages 51 et 55 respectivement.

Les antennes 5 et 5' sont montées respectivement dans les deux parties métalliques mobiles l'une par rapport à l'autre, par exemple le battant et le dormant d'une porte. Lorsque les deux parties se rapprochent, le déphasage + φ introduit par la variation de la capacité apparente de l'antenne 5 (dû à la partie métallique dans laquelle est montée l'antenne 5'), est compensé par le déphasage - φ introduit pour la même raison par l'antenne 5'. Le circuit d'émission 3 n'est donc pas désaccordé et les deux parties métalliques intégrant les antennes 5 et 5' peuvent se rapprocher jusqu'à venir en contact mutuel.

Par contre, la variante de la figure 4 permet de détecter comme décrit précédemment un obstacle présent au voisinage des antennes 5 et 5' car celles-ci n'ont pas un mouvement relatif symétrique par rapport à l'obstacle.

## Revendications

1. Détecteur de proximité pour détecter la présence d'un corps étranger susceptible de se déplacer dans un environnement, comprenant un oscillateur radiofréquence (1) produisant un premier signal électrique, des moyens d'émission (3) - réception (6) produisant un second signal électrique en réponse à l'application dudit premier signal électrique, un circuit (9) pour comparer les phases desdits premier et second signaux électriques et produire un signal de sortie en réponse à une variation de leur déphasage, et un circuit de réaction (1, 13) piloté par ledit signal de sortie pour tendre à annuler ladite variation du déphasage, ledit circuit de réaction comprenant un circuit intégrateur (13) à constante de temps élevée devant la gamme de vitesses relatives de déplacement dudit corps étranger par rapport auxdits moyens d'émission (3) - réception (6), caractérisé en ce que les moyens d'émission-réception comprennent un circuit d'émission (3) à antenne capacitive (5) rayonnante et un circuit de réception (6) formant avec ledit circuit d'émission (3) un coupleur sélectif et en ce que ledit oscillateur (1) est un oscillateur à fréquence ajustable piloté par ledit circuit intégrateur (13) pour faire varier la fréquence dudit premier signal dans le sens qui tend à assurer l'accord dudit circuit d'émission (3) par annulation de ladite variation du déphasage.

2. Détecteur selon la revendication 1, caractérisé en ce que ledit circuit comparateur de phases (9) produit un signal de sortie qui est une fonction du déphasage entre lesdits premier et second signaux.

3. Détecteur selon la revendication 2, caractérisé en ce que lesdits circuits d'émission (3) et de réception (6) sont couplés pour présenter des signaux en quadrature à l'accord dudit circuit d'émission et en ce que ledit circuit comparateur de phases (9) produit un signal de sortie proportionnel au cosinus du déphasage entre lesdits premier et second signaux.

4. Détecteur selon l'une quelconque des revendications 1 à 3, caractérisé en ce qu'il comprend un premier comparateur de seuil (14) pour comparer ledit signal de sortie à une première tension de seuil prédéterminée et délivrer en sortie l'un de deux états logiques représentatifs, l'un de la présence d'un corps étranger, l'autre de l'absence d'un corps étranger dans l'environnement de ladite antenne.

5. Détecteur selon la revendication 4, caractérisé en ce qu'il comprend un circuit détecteur d'état (17) connecté audit circuit de réception (6) pour délivrer un signal d'alarme représentatif d'un état de fonctionnement anormal du détecteur lorsque l'amplitude dudit second signal est inférieure à une valeur prédéterminée.

6. Détecteur selon la revendication 5, caractérisé en ce que ledit détecteur d'état (17) comprend un voltmètre de crête (25) connecté audit circuit de réception (6) et un second comparateur de seuil (26) pour comparer la tension de sortie dudit voltmètre à une deuxième tension de seuil prédéterminée représentative de ladite valeur prédéterminée, ledit second comparateur présentant en sortie l'un de deux états logiques représentatifs, l'un dudit état anormal de fonctionnement, l'autre d'un état normal de fonctionnement dudit détecteur.

7. Détecteur selon la revendication 6, caractérisé en ce qu'il comprend un premier circuit logique (16) connecté en entrée aux sorties desdits premier (14) et second (26) comparateurs de seuil et présentant en sortie un premier état logique en réponse à la détection de la présence d'un corps étranger et/ou d'un état anormal de fonctionnement du détecteur et un second état logique lorsque l'une et l'autre de ces deux conditions sont absentes.

8. Détecteur selon l'une quelconque des revendications 4 à 7 pour dispositif motorisé, caractérisé en ce que la sortie dudit comparateur de seuil (14, 26) est connectée à un circuit (T1, 43) de commande de motorisation dudit dispositif par l'intermédiaire d'un second circuit logique (32) à mémoire d'état adapté pour basculer d'un état d'autorisation à un état d'inhibition de fonctionnement du circuit (T1, 43) de commande de motorisation en réponse à la détection d'un corps étranger, et en ce que ledit détecteur comprend au moins un circuit de réarmement (35, 39) connecté audit second circuit logique (32) pour le faire basculer dans ledit état d'autorisation de fonctionnement dudit circuit (T1, 43) de commande de motorisation en réponse à une commande de réarmement.

9. Détecteur selon la revendication 8, caractérisé en ce que ledit circuit de réarmement comprend un troisième comparateur de seuil (35) adapté pour comparer ledit signal de sortie dudit circuit comparateur de phases (9) à une troisième tension de seuil (36) et dont la sortie change d'un premier à un second état en réponse à une variation dudit signal de sortie dudit circuit comparateur de phases représentative de l'enlèvement dudit corps étranger.

10. Détecteur selon l'une quelconque des revendications 8 et 9, caractérisé en ce que ledit circuit de réarmement comprend un circuit à commande manuelle (37-39) pour forcer la sortie du circuit de réarmement dans ledit second état.

11. Détecteur selon la revendication 10, caractérisé en ce que les sorties dudit troisième comparateur de seuil (35) et dudit circuit à commande manuelle (37-39) sont connectées en parallèle à une entrée de réarmement dudit second circuit logique (32).

12. Détecteur selon l'une quelconque des revendications 1 à 11 pour dispositif comportant deux parties métalliques conjuguées susceptibles de mouvements relatifs l'une par rapport à l'autre, caractérisé en ce que le circuit d'émission (3) comprend deux antennes (5, 5') disposées respectivement dans lesdites parties métalliques conjuguées et couplées l'une à l'autre en opposition de phase par l'intermédiaire d'un transformateur d'impédance (50).

FIG.: 1

FIG.: 4

FIG.:2

FIG.: 3

EP 0 522 949 A1

Office européen
des brevets

**RAPPORT DE RECHERCHE EUROPEENNE**

Numero de la demande

EP 92 40 1936

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | FR-A-2 461 990 (SNECMA)<br>* page 5, ligne 12 - page 7, ligne 16; figures 1,2 * | 1,2,4 | G01V3/08 |
| A | FR-A-2 609 823 (PAGNOL ET AL)<br>* page 3, ligne 21 - page 4, ligne 26; figure 1 * | 1,2 | |
| A | US-A-4 169 260 (BAYER)<br>* colonne 3, ligne 9 - colonne 4, ligne 44; figure 1 * | 1 | |
| A,D | FR-A-2 606 162 (BERTIN ET CIE) | | |

DOMAINES TECHNIQUES
RECHERCHES (Int. Cl.5)

G01V

Le présent rapport a été établi pour toutes les revendications

| Lieu de la recherche | Date d'achèvement de la recherche | Examinateur |
|---|---|---|
| LA HAYE | 22 OCTOBRE 1992 | ANDERSON A.TH. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....
& : membre de la même famille, document correspondant

EPO FORM 1503 03.82 (P0402)